# EUROPÄISCHE PATENTSCHRIFT

(11) **EP 2 859 296 B1**
(45) Veröffentlichungstag und Bekanntmachung des Hinweises auf die Patenterteilung: **28.09.2016**
(21) Anmeldenummer: 13727205.0
(22) Anmeldetag: 07.06.2013
(51) Int. Cl.: F28F 9/02

(54) **WÄRMETAUSCHERSYSTEM, VERFAHREN ZU DESSEN HERSTELLUNG SOWIE FLUIDVERTEILUNGSELEMENT**
HEAT EXCHANGER SYSTEM, METHOD FOR PRODUCING SAME, AND FLUID DISTRIBUTION ELEMENT
SYSTÈME D'ÉCHANGEUR THERMIQUE, PROCÉDÉ DE PRODUCTION CORRESPONDANT ET ÉLÉMENT DE DISTRIBUTION DE FLUIDE

(30) Priorität: 08.06.2012 DE 102012011520
(43) Veröffentlichungstag der Anmeldung: 15.04.2015
(73) Patentinhaber: FRAUNHOFER-GESELLSCHAFT zur Förderung der angewandten Forschung e.V., 80636 Munich (DE)
(72) Erfinder: STREHLOW, Andreas, 34369 Hofgeismar (DE); NITSCH, Birgo, 34369 Hofgeismar (DE); OLTERSDORF, Thore, 79102 Freiburg (DE); WERNER, Markus, 09127 Chemnitz (DE)
(74) Vertreter: Pfenning, Meinig & Partner mbB
(86) Internationale Anmeldenummer: PCT/EP2013/061761
(87) Internationale Veröffentlichungsnummer: WO 2013/182666

(56) Entgegenhaltungen:
- EP-A1- 1 548 387
- WO-A1-99/46544
- DE-A1- 4 319 192
- DE-A1- 10 141 526
- DE-A1-102009 042 613
- DE-U1- 9 302 504
- JP-A- 2000 304 472
- US-A- 5 979 547
- US-A1- 2002 080 563
- US-A1- 2006 102 331
- US-A1- 2008 105 420
- US-A1- 2010 282 454

## Beschreibung

Die vorliegende Erfindung betrifft mindestens ein Wärmetauschersystem, das ein Fluidverteilungselement sowie einen 1-Pass-Wärmeübertrager umfasst. Das Fluidverteilungselement weist dabei kaskadierte Möglichkeiten der Verteilung von Fluidströmen, ausgehend von einem zentralen Einlass, auf, wobei die verteilten Fluidströme in den mindestens einen Wärmeübertrager eingespeist werden. Kennzeichnend dabei ist, dass das Fluidverteilungselement die gleiche Anzahl an Fluidauslässen aufweist, wie der 1-Pass-Wärmeübertrager durchströmbare Rohre besitzt. Die Verbindung zwischen Fluicfverteilungselementen und dem 1-Pass-Wärmeübertrager ist dabei durch eine direkte Verbindung des Fluidverteilungselementes mit dem 1-Pass-Wärmeübertrager realisiert, ebenso ist von der vorliegenden Erfindung eine indirekte Verbindung des Fluidverteilungselementes mit dem 1-Pass-Wärmeübertrager umfasst, wobei jeder Fluidauslass des Fluidverteilungselementes über ein Verbindungselement mit dem Wärmeübertrager verbunden ist. Die vorliegende Erfindung betrifft ebenso ein Verfahren zur Herstellung eines erfindungsgemäßen Wärmetauschersystems sowie ein speziell ausgestaltetes Fluidverteilungselement.

Ein wichtiger Parameter für die Beurteilung der Effizienz eines kreuzstrombetriebenen Verdampfers ist die optimale Temperaturverteilung auf der Oberfläche. Diese Temperaturverteilung ist Voraussetzung für eine geringe Temperaturdifferenz zwischen den beteiligten Arbeitsmedien. Diese Differenz wird als Grädigkeit bezeichnet. Um eine optimale Grädigkeit eines Wärmeübertragers zu erreichen, ist eine gleichmäßige Verteilung des Kältemittels und des Luftstroms auf der Außenseite notwendig. Neben der Grädigkeit spielt der Druckverlust eine Rolle. Gleichmäßige und möglichst optimierte, kältemittelseitige Druckverluste bedeuten eine geringe Änderung in der Verdampfungstemperatur und damit wiederum insgesamt eine hohe Temperaturhomogenität. Dies erreicht man besonders gut in sogenannten 1-Pass-Wärmeübertragern, bei denen die Durchströmung des Wärmeübertragers durch ein Rohrregister/Flachrohr sich auf ein einziges Mal reduziert. Die Fluidverteilung und der Sammler bestehen meist aus einfachen Hohlzylindern mit Schlitzen bzw. Langlöchern für den Anschluss der Flachrohre. Dadurch entstehen aber große Probleme bei der Fluidverteilung, da je nach Leistung des Verdampfers eine veränderliche Vielzahl dieser Flachrohre im Wärmeübertrager verwendet wird und an mindestens einen Verteiler sowie mindestens einen Sammler angeschlossen werden. Sowohl der konventionell verwendete Verteiler als auch der Sammler weisen dabei große Totvolumina auf, was meistens eine Phasenseparation durch geringe Strömungsgeschwindigkeiten aufgrund der großen, durchströmten Querschnitte beim Eintritt des Kältemittels in den Verdampfer verursacht. Bedingt durch die Anwendung von Flachrohren insbesondere von MPE-Rohren, die für sich wiederum eine Vielzahl von durchströmten Kanälen in sich vereinen, muss die Fluidverteilung nicht nur für die Gesamtheit der Flachrohre betrachtet, sondern auch bezogen auf die Vielzahl an Kanälen bei der Verwendung von MPE-Rohren abgestimmt werden. Ein Vorteil dieser Wärmeübertrager gegenüber Wärmeübertragern bestehend aus Rippenblock und Rohrregistern - üblicherweise Rundrohrregistern - ist die Reduktion der inneren Volumina. Die Minimierung dieser inneren Volumina ist eine notwendige Voraussetzung für die Kältemittelminimierung von Kältekreisen. Der Kältemittelminimierung kommt eine zentrale Rolle zu bei der Anwendbarkeit von brennbaren Kältemitteln sowie der Steigerung der Wirtschaftlichkeit zahlreicher, hermetischer Kältekreise, die abhängig von der Füllmenge unterschiedlich aufwändig gewartet werden müssen. Bereits bei der Markteinführung und dem Design von gelöteten Aluminium Microchannel-Wärmeübertragern als Verflüssiger ist man von einer Reduktion von ca. 40% des inneren Volumens ausgegangen, trotzdem die Volumina der verwendeten Hohlzylinder für Verteiler und Sammler noch recht großzügig sind. Hier ist von weiteren Reduktionspotenzialen auszugehen, was eine weitere Kältemittelminimierung ermöglicht.

Wie bereits erwähnt sind große Totvolumina der Hauptgrund für die Phasenseparation und damit eine schlechte Phasenverteilung. Volumenverdrängende Einbauten ändern an dieser Situation nur bedingt etwas. Das durchströmte Volumen im Verteiler ist weiterhin zusammenhängend, was genau zu diesen Totvolumina führt, und die stark unterschiedliche Strömungsgeschwindigkeiten aufgrund leistungsgeregelter Kältekreise erschweren eine optimierte Auslegung weiter.

US5979547 offenbart ein Wärmetauschersystem, umfassend ein Fluidverteilungselement und einen 1-Pass-Wärmeübertrager.

DE10141526 offenbart ein Verteilungselement.

Ausgehend von den bekannten Systemen ist es Aufgabe der vorliegenden Erfindung, ein Wärmetauschersystem bereitzustellen, mit dem möglichst geringe Totvolumina erzielbar sind. Zudem ist es Aufgabe der vorliegenden Erfindung, ein Fluidverteilungselement, insbesondere zum Anschluss an einen Wärmeübertrager, zur Verfügung zu stellen, mit dem sich ein erfindungsgemäßes Wärmetauschersystem herstellen lässt.

Diese Aufgabe wird bezüglich des 1-Pass-Wärmetauschesystems mit den Merkmalen des Patentanspruchs 1, bezüglich eines Verfahrens zur Herstellung des erfindungsgemäßen 1-Pass-Wärmetauschersystems mit den Merkmalen des Patentanspruchs 12 sowie bezüglich eines Fluidverteilungselements mit den Merkmalen des Patentanspruchs 14 gelöst. Dabei stellen die jeweiligen abhängigen Patentansprüche vorteilhafte Weiterbildungen dar.

Die vorliegende Erfindung betrifft somit ein Wärmetauschersystem, umfassend
a) ein Fluidverteilungselement mit einem zentralen Einlass und fluiddichter, kanalartiger Fluidführung, die sich kaskadiert und binär in eine Mehrzahl von Fluidführungskanälen mit jeweils einem Fluidauslass verzweigt,
b) mindestens einen 1-Pass-Wärmeübertrager, der aus einer Mehrzahl in einer Ebene angeordneten durchströmbaren Rohren mit planen Teilflächen, vorzugsweise Flachrohren, sowie Rippen, die an diesen planen Teilflächen mit den Rohren verbunden sind, besteht und die Rippen zum Wärmeaustausch mit Luft umströmbar sind, wobei jedes der in einer Ebene angeordneten durchströmbaren Rohre einen Rohreintritt für ein Fluid und einen Rohraustritt für ein Fluid aufweist, wobei die Rohraustritte (34) in ein Fluidsammelsystem münden, wobei das Fluidverteilungselement die gleiche Anzahl an Fluidauslässen aufweist, wie der 1-Pass-Wärmeübertrager durchströmbare Rohre aufweist und
c) eine direkte Verbindung des Fluidverteilungselementes mit dem 1-Pass-Wärmeübertrager realisiert ist, wobei jeder Fluidauslass des Fluidverteilungselementes stoffschlüssig und fluiddicht mit jeweils einem Rohreintritteines Rohres des Wärmeübertragers verbunden ist, oder
d) eine indirekte Verbindung des Fluidverteilungselementes mit dem 1-Pass-Wärmeübertrager realisiert ist, wobei jeder Fluidauslass des Fluidverteilungselementes stoffschlüssig und fluiddicht mit jeweils einem Rohreintritt eines Rohres des Wärmeübertragers verbunden ist, wobei die Verbindung über jeweils ein fluiddicht durchströmbares Verbindungselement oder über ein Verbindungselement mit einer der Anzahl der zu verbindenden Fluidauslässe und Rohreintritte entsprechenden Anzahl von verbindenden Fluidführungen realisiert ist.

Die vorliegende Erfindung betrifft somit einen Verbund aus einem Fluidverteilungselement und mindestens einem 1-Pass-Wärmeübertrager, wobei entweder das Fluidverteilungselement direkt mit dem Wärmeübertrager verbunden ist (direkter Verbund) oder aber das Fluidverteilungselement mit dem Wärmeübertrager über entsprechende Verbindungselemente (indirekter Verbund) verbunden ist. Maßgeblich dabei ist jeweils, dass das Fluidverteilungselement die gleiche Anzahl an Fluidauslässen aufweist wie der Wärmeübertrager durchströmbare Rohre innehat. Insofern ist eine direkte Verteilung des Fluids über das Fluidverteilungselement und eine Einspeisung in den 1-Pass-Wärmeübertrager möglich.

In der vorliegenden Anmeldung wird ein neues, kombiniertes Konzept für die Fluidverteilung und den Anschluss eines Fluidverteilers an luftbeaufschfagte Wärmeübertrager vorgestellt, der mindestens aus Flachrohren wie z.B. MPE-Rohren und aus gewellten oder gebogenen und abgelängten Rippen, z. B. aus Aluminiumblech, besteht. Der Verteiler dient dabei der Verteilung von ein- oder mehrphasigen Fluiden. Grundlage dieses neuen Konzepts ist der Anschluss bekannter in Blech eingebrachter Kanalstrukturen wie aus WO2009/01659 für Verdampfer in Kühlschränken oder Solarabsorber bekannt, die
- mittels Roll-Bonding und Aufblasen des entstandenen verfügten Doppelblechs oder
- mittels wirkmedien- bzw. wirkenergiebasierter Umformung mit anschließender Verfügung hergestellt werden können.

Zu den wirkmedienbasierten Umformverfahren zählen beispielsweise Innen- und Außenhochdruck-Umformverfahren mit flüssigen und gasförmigen Wirkmedien, das elektrohydraulische Umformen sowie Gasgenerator und Explosivumformung. Als wirkenergiebasiertes Umformverfahren kommt die Elektromagnetumformung in Frage.

Unter einem 1-Pass-Wärmeübertrager werden dabei Wärmeübertrager verstanden, bei denen jedes Rohr gleichzeitig ein Rohrregister ist, also keine Rückführung im Verbund aus Rohren und Lamellen eines Rohres über Krümmer stattfindet. Im Unterschied dazu hat beispielsweise ein 2-pass-Wärmeübertrager pro Rohregister mindestens 2 Rohre, die in dem Verbund aus Rippen und Rohren zurückgeführt werden.

Im Unterschied zu diesen bekannten Strukturen dient die zugrunde liegende Erfindung einer kombinierten Vorfertigung sowohl der das Fluid verteilenden Kanalstruktur als auch dem Anschluss der Flachrohre. Insbesondere für Wärmeübertrager wie z. B. Luft-Kältemittel-Verdampfer in Kältekreisläufen wird mit diesem Verfahren eine Lösungsstrategie für die abschließende Fertigung des Wärmeübertragers möglich. Der fertige Wärmeübertrager wird in diesem Fall mit einem Fluidverteiler kombiniert, der ein geringeres Totvolumen selbst im Anschlussbereich mit sich bringt, was eine vorteilhafte Konstruktion gegenüber bekannten Fluidverteilern bietet. Diese Vorteile bestehen darin, dass
- zum einen eine Phasenseparation durch eine Retention der Strömung in diesen Totvolumina auf ein Minimum reduziert ist und
- zum anderen in der Möglichkeit, dass die vorgeformten Anschlussbereiche für das Flachrohr sich in der Blechstruktur separat voneinander befinden, was eine Rückvermischung der Strömung verhindert.

Mit dem neuen Fluidverteiler werden diese Reduktionspotenziale auch bei der Komponente Verdampfer möglich. Die Kombination der Fertigung des Fluidverteilers mit und ohne Einbauten zur kontrollierten Ausrichtung und Beruhigung der Strömung ermöglicht direkte Anschlussbereiche für das MPE-Rohr in einem Werkstück.

Das der Erfindung zugrundeliegende Wärmetauschersystem sowie das erfindungsgemäße Fluidverteilungssystem sind geeignet moderne Verdampfertechnologien zu optimieren. Dabei handelt es sich vor allem um Verdampfer für Kompressionskälte- bzw. auch Wärmepumpenanlagen. Es löst das Schlüsselproblem der schlechten Verteilung der Phasen des Kältemittels im Kältekreis am Eintritt des Verdampfers von gelöteten Aluminium-Wärmeübertragern. Der Leistungsbereich ist dabei beliebig, weshalb das Anwendungsgebiet sehr groß ist. Vorsichtig geschätzt haben Kompressionskälteanlagen von den möglichen Kälteerzeugenden Technologien im Bereich der Kühlung und Kälteerzeugung einen Marktanteil von mehr als 90%. Bei der Wärmeerzeugung haben Wärmepumpen, die mit dem gleichen Prinzip betrieben werden, einen wachsenden Marktanteil und gesamt einen Anteil von ca. 5-10% am deutschen Markt mit stark steigender Tendenz.

Das Totvolumen des Verteilers und insbesondere des Anschlussstücks sind auf diese Weise minimierbar und versprechen deswegen eine sehr geringe Phasenseparation. Soweit die Druckverluste für eine bestimmte Ausführung des Verteilers nicht zu groß werden und eine Regelbarkeit des Expansionsventils im Kältekreis nicht mehr gewährleistet ist, kann der Massenstrom variiert werden, mit geringem Einfluss auf die Verteilungsqualität. Das ist ein wichtiger Schritt, um auch für die Komponente Verdampfer eine Robustheit für den leistungsgeregelten Betrieb zu ermöglichen. Neben dieser direkten Verbesserung der Eigenschaften als Verteiler bedeutet die Verwendung eine weitere Verringerung innerer Volumina des Verdampfers. Deswegen hat dieser Verteiler deutliche Vorteile gegenüber bisherigen Verteilungsansätzen um auch die Reduktion klimaschädlicher bzw. brennbarer Kältemittel zu verringern. Insbesondere betrifft die vorliegende Erfindung eine spezielle Verbindungstechnologie zwischen Fluidverteiler und wärmeübertragenden Rippen-Ffachrohr-Block, d.h. den eigentlichen 1-Pass-Wärmeübertrager. Dabei kann es sich entweder um einen Anschlussbereich im gleichen Blechbauteil handeln oder ein separates Anschlussstück. Letzteres verursacht aber viele Einzelverbindungen zwischen Verteiler und Anschlussstück, was eine druckdichte Bauweise des Bauteils erschwert. Der Vorteil besteht jedoch darin, dass in den Rohrzwischenstücken eine Düse (60) benutzt und eingesetzt werden kann, die am Eintritt des Anschlussbereiches eine Versprühung des Fluids vom Verteiler kommend verursacht. Auf diese Weise kann eine Phasenverteilung selbst am Eintritt des einzelnen Flachrohres kontrolliert werden. Denkbar ist auch, dass diese Düseneinsätze direkt in Kanälen vor dem Anschlussbereich im kombinierten Bauteil, das sowohl Verteiler als auch Anschlussbereich in sich vereint, angeordnet sind

Eine bevorzugte Ausführungsform der Erfindung sieht vor, dass die kaskadierte und binäre Verzweigung der Fluidführungskanäle des Fluidverteilungselementes symmetrisch ausgeführt ist. Eine symmetrische Verteilung im Fluidverteiler sieht vor, dass jeder Fluidführungskanal stets in eine gleiche Anzahl von Fluidführungskanälen aufgespalten wird, sodass für jeden Fluidführungskanal der gleich Druckverlust resultiert.

Die Abstände zwischen einzelnen Verzweigungsebenen und/oder die Länge der Verzweigungsebenen kann für eine Strömungsberuhigung angepasst werden. Es ist denkbar, neben den genannten Düsen am Austritt des Fluidverteilungselements weitere Einsätze oder gesondert umgeformte Bereiche für eine Strömungsberuhigung in jeder Verzweigungsebene auszunutzen. Die beschleunigte Strömungsgleichrichtung bzw. -beruhigung kann zu einer kompakteren Bauweise führen. Dies beeinflusst im großen Maße die Gesamtlänge. Auf diese Weise verringern sich die notwendigen Strömungsweglängen, die für homogene Strömungsverhältnisse sorgen und die für den Verteilungsvorgang von Vorteil sind.

Die einzelnen Verzweigungsebenen der Fluidverteilungskanäle sind dabei bevorzugt derart voneinander beabstandet, dass eine optimale Ausbildung der Strömungsform im Bereich jeweils vor der nächsten Verzweigungsebene gewährleistet ist. Bevorzugt weisen die einzelnen Verzweigungspunkte der Kaskadierung der Fluidverteilungskanäle einen Mindestabstand voneinander auf, der dem Fünffachen des hydraulischen Durchmessers entspricht.

Der hydraulische Abgleich ist in der symmetrischen Ausführung der Verzweigungen einfacher auslegbar. Allerdings auch in asymmetrischer Ausführung machbar. Der Unterschied besteht darin, dass ab dem Verzweigungspunkt in der asymmetrischen Ausführung bei der Mehrzahl der Verzweigungen keine ungekrümmte Spiegellinie existiert. Diese Ausführung lehnt sich an an Umsetzungen wie in WO 2004/097323 A1 beschrieben.

Gemäß dem Prinzip der vorliegenden Erfindung weist das Wärmetauschersystem mindestens einen 1-Pass-Wärmeübertrager auf. Für den Fall, dass das Wärmetauschersystem lediglich einen Wärmeübertrager umfasst, ist dieser zwischen dem Fluidverteilungselement und dem Fluidsammelsystem eingebettet und wird über das Fluidverteilungselement mit Fluid versorgt, während die Abführung des Fluids über das Fluidsammelelement erfolgt. Für den Fall, dass mehrere Wärmeübertrager vorhanden sind, erfolgt die Anordnung derart, dass die 1-Pass-Wärmeübertrager gestapelt sind und entweder im Kreuz-Gegen- oder im Kreuz-Gleichstrom von der Luft durchströmt werden. Die Verschaltung der einzelnen 1-Pass-Wärmeübertrager erfolgt dann über Krümmer, die wiederum jeweils ein Rohr miteinander verbinden. Jeder 1-Pass-Wärmeübertrager hat somit die gleiche Anzahl an Flachrohren. Jeder dieser Krümmer muss eine Änderung der Strömungsrichtung um 180° ermöglichen, um beim Wiedereintritt dem jeweils nachfolgenden 1-Pass-Wärmeübertrager zugeführt zu werden.

In einer weiteren bevorzugten Ausführungsform sind die Fluidführungskanäle des Fluidverteilungselements plan in einer Ebene liegend angeordnet oder weisen eine Krümmung und/oder einen Knick um eine weitere Dimension auf.

In einer weiteren Ausführungsform ist der Fluidauslass jedes Fluidführungskanals eines Fluidverteilungselementes am Ende des jeweiligen Fluidführungskanals ausgebildet, also in der Ebene, in der der Fluidfluss stattfindet, angeordnet. Alternativ hierzu ist es jedoch ebenso möglich, dass der Fluidauslass jedes Fluidführungskanals eines Fluidverteilungselementes in der Wandung des jeweiligen Fluidführungskanals eingebracht ist, insbesondere ist es hierbei bevorzugt, wenn der Fluidauslass als Schlitz oder als Langloch ausgebildet ist, der sich über einen Großteil der Länge der letzten Verzweigungsebene eines jeden Fluidführungskanals erstrecken kann. In dieser Ausführungsform wird der Fluidfluss beispielsweise um ca. 90 Grad beim Austreten aus dem Fluidführungskanal umgelenkt.

In einer weiter bevorzugten Ausführungsform kann das weiter unten im Detail beschriebene erfindungsgemäße Fluidverteilungselement im erfindungsgemäßen Wärmetauschersystem verwendet werden.

Bei diesen zuvor beschriebenen Ausführungsformen ist es insbesondere von Vorteil, wenn der in die Wandung des Fluidführungskanals eingebrachte Fluidauslass eine einfache oder geschulterte Auskragung der Wandung des Fluidführungselementes aufweist, wobei Eintrittsöffnung oder das Verbindungselement stoffschlüssig mit der Auskragung verbunden ist. Hierdurch kann die Eindringtiefe von eingesteckten Flachrohren kontrolliert werden.

Alternativ oder zusätzlich hierzu ist es ebenso möglich, wenn der Rohreintritt des Wärmeübertragers (sofern eine direkte Verbindung des Wärmeübertragers mit dem Fluidverteiler hergestellt ist) oder das Verbindungselement (sofern eine indirekte Verbindung zwischen Wärmeübertrager und Fluidverteiler hergestellt ist) jeweils im Bereich der herzustellenden Verbindung mit dem Fluidverteiler eine Verjüngung des jeweiligen Anschlussstückes, d.h. des jeweiligen Rohres aufweisen, sodass die jeweiligen Elemente in die Auskragung des Fluidverteilers eingefügt werden können. Die jeweiligen Rohreintritte bzw. Verbindungselemente sind dabei ebenso stoffschlüssig mit der Auskragung des Fluidverteilungselementes verbunden.

Eine weitere bevorzugte Ausführungsform sieht vor, dass im Falle einer direkten Verbindung des Fluidverteilungselementes mit dem 1-Pass-Wärmeübertrager zwischen einem Fluidauslass des Fluidverteilungselementes und der Eintrittsöffnung eines korrespondierenden Rohres des Wärmeübertragers ein Rohrboden, Verteilerbehältnis, Verteiler-, Sammeikasten oder ein Teil desselben angeordnet ist. Alternativ hierzu ist im Falle einer indirekten Verbindung des Fluidverteilungselementes mit dem 1-Pass-Wärmeübertrager über ein Verbindungselement, ein Rohrboden, Verteilerbehältnis, Verteiler-, Sammelkasten oder ein Teil desselben angeordnet, zwischen dem Verbindungselement und der Eintrittsöffnung des korrespondierenden Rohres des Wärmeübertragers.

Ein zuvor genannter Sammelkasten kann beispielsweise ein Gehäuse mit einer der Anzahl der Fluidauslässe des Fluidverteilungselements entsprechenden Anzahl von Einlässen und eine gleiche Zahl von Auslässen aufweisen, wobei jeder Einlass einem Auslass zugeordnet ist und im Inneren des Gehäuses über Trennbleche ein abgeschlossener Kanal für das Fluid definiert ist.

Der Sammelkasten kann beispielsweise zylinderförmig ausgestaltet sein und sich aus zwei Halbschalen zusammensetzen.

Die Trennbleche, die paarweise innerhalb des Gehäuses des Sammelkastens angeordnet sind, bilden somit ein abgeschlossenes Teilvolumen des Sammelgehäuses, das somit vom Fluidverteilungselement in Richtung des Wärmeübertragers durchströmt wird. Der restliche Volumenbereich des Sammelkastens wird im Falle einer fluiddichten Verbindung der paarweisen Trennbleche mit dem Sammelkasten somit nicht vom Fluid ausgefüllt. Dies dient insbesondere der Volumenminimierung für das Fluid im Wärmetauschersystem.

Ein derartiger Sammelkasten hat insbesondere eine stabilisierende Wirkung bei einem Herstellungsprozess jedes einzelnen 1-Pass-Wärmeübertragers. In den Sammelkasten können in die entsprechenden Öffnungen bereits die vorgefertigen Rohrmündungen sowohl das Fluidverteilungselement als auch des Wärmeübertragers eingefügt und im Anschluss stoffschlüssig mit dem Sammeikasten verbunden werden. Vorzugsweise wird dies in einem Lötofen mit kontrollierter Atmosphäre gefertigt wobei das Gehäuse des Sammelkastens halbiert ist, um eine getrennte stoffschlüssige Verbindung von dem Fluidverteilungselement mit einer Hälfte des Sammelkastens und von dem 1-Pass-Wärmeübertrager mit der anderen Hälfte des Sammelkastens zu ermöglichen. Erst in einem nachgeschaltetem Prozessschritt wird der Sammelkasten wieder stoffschlüssig verbunden. Allerdings nicht im Lötofen sondern eher mit einem Schweißverfahren. Dies ermöglicht zum einen eine kompaktere Ausführung der Bauteile, die in der Lötstraße verbunden werden sollen (was häufig notwendig ist aufgrund beschränkter Abmessungen der Lötstraßendimensionen). Zum anderen ist der halbierte Sammelkasten einfach zu verbinden, zum Beispiel mit einem Schweißverfahren, da die Verbindung eine kleine Naht (Nahtlänge) im Verhältnis zum Konstruktionsvolumen aufweist. Es ist auch denkbar, dass in weniger beschränkten Lötstraßen eine komplette stoffschlüssige Fertigung ohne Halbierung des Sammelkastens erfolgt.

Bei einem derartigen Sammelkasten ist es insbesondere bevorzugt, wenn die Geometrie der Einlässe und/oder der Auslässe des Sammelkastens dem Querschnitt der Fluidauslässe des Fluidverteilungselements oder dem Querschnitt der Fluidauslässe des Verbindungselementes bzw. dem Querschnitt der durchströmbaren Rohre mit planen Teilflächen, vorzugsweise Flachrohre des 1-Pass-Wärmeübertragers entspricht.

Weiter vorteilhaft ist es, wenn das Gehäuse des Sammelkastens oder ein Teil des Gehäuses, beispielsweise eine oben erwähnte Halbschale eines zylinderförmigen Gehäuses, einstückig mit den Fluidauslässen des Fluidverteilungselementes ausgebildet ist. Eine derartige einstückige Ausbildung des Gehäuses des Sammelkastens bzw. eines Teiles des Gehäuses eines entsprechenden Sammelkastens kann beispielsweise durch Tiefziehverfahren oder Hochdruckumformungen etc. hergestellt werden.

Weitere Vorteile können sich ergeben, wenn die Verbindungselemente, die Fluidverteilungselement und Wärmeübertrager miteinander verbinden, gebogen oder gekrümmt sind. Hierbei kann ein weiteres Platzersparnis des 1-Pass-Wärmetauschersystems erfolgen.

Weiter vorteilhaft ist es, wenn das Verbindungselement ähnlich wie weiter oben beschrieben Langlöcher oder Schlitze aufweist und somit ähnlich ausgeführt ist wie bei einem direkten Anschluss des 1-Pass-Wärmeübertragers an das Fluidverteilungselement. Auf diese Weise kann analog zu der paarweisen Verwendung der Trennbleche in einem zylinderförmigen und eventuell halbiertem Sammelkasten ein vorgefertigter Verbund aus Verbindungselement und 1-Pass-Wärmeübertrager entstehen, der sich verfahrenstechnisch leichter in einem Fertigungsprozess mit Lötstraße integrieren lässt.

Die vorliegende Erfindung betrifft ebenso ein Verfahren zur Herstellung eines zuvor beschriebenen Wärmetauschersystems, bei dem
a) das Fluidverteilungselement, der Wärmeübertrager sowie ggf. der Rohrboden, das Verteilerbehältnis, der Verteiler-, der Sammelkasten oder ein Teil desselben, oder
b) das Fluidverteilungselement , der Wärmeübertrager und die Verbindungselemente sowie ggf. der Rohrboden, das Verteilerbehältnis, der Verteiler-, der Sammelkasten oder ein Teil desselben formschlüssig gefügt sowie stoffschlüssig und fluiddicht miteinander verbunden werden.

Insbesondere erfolgt das stoffschlüssige und fluiddichte Verbinden mittels eines Lötprozesses.

Die Erfindung betrifft ebenso ein Fluidverteilungselement, das einen zentralen Einlass und eine fluiddichte, kanalartige Fluidführung aufweist, die sich kaskadiert und binär in eine Mehrzahl von Fluidführungskanälen mit jeweils einem Fluidauslass verzweigt, wobei der Fluidauslass jedes Fluidführungskanals in der Wandung des Fluidführungskanals eingebracht ist.

Bezüglich bevorzugter Ausführungsformen des Fluidverteilungselementes wird auf die voranstehenden, im erfindungsgemäßen 1-Pass-Wärmetauschersystem enthaltene Fluidverteilungselements gemachten Ausführungsformen verwiesen. Sämtliche dort für dieses Fluidelement bevorzugte Ausführungsformen sind auch Gegenstand des erfindungsgemäßen Fluidverteilungselementes.

Eine weiter bevorzugte Ausführungsform des Fluidverteilungselements gemäß der vorliegenden Erfindung sieht vor, dass der Querschnitt des Fluidführungskanals zumindest im Bereich des Fluidauslasses im Vergleich zum Querschnitt des Fluidführungskanals im Bereich der Kaskadierung vergrößert ist im Falle der direkten Verbindung von Fluidverteilungselement und 1-Pass-Wärmeübertrager. Dadurch kann einerseits beispielsweise die Einstecktiefe von eingesteckten Flachrohren variiert werden.

Die vorliegende Erfindung wird anhand der nachfolgenden Figuren eingehender beschrieben, ohne die Erfindung allerdings auf die speziell dargestellten Ausführungsformen zu beschränken.

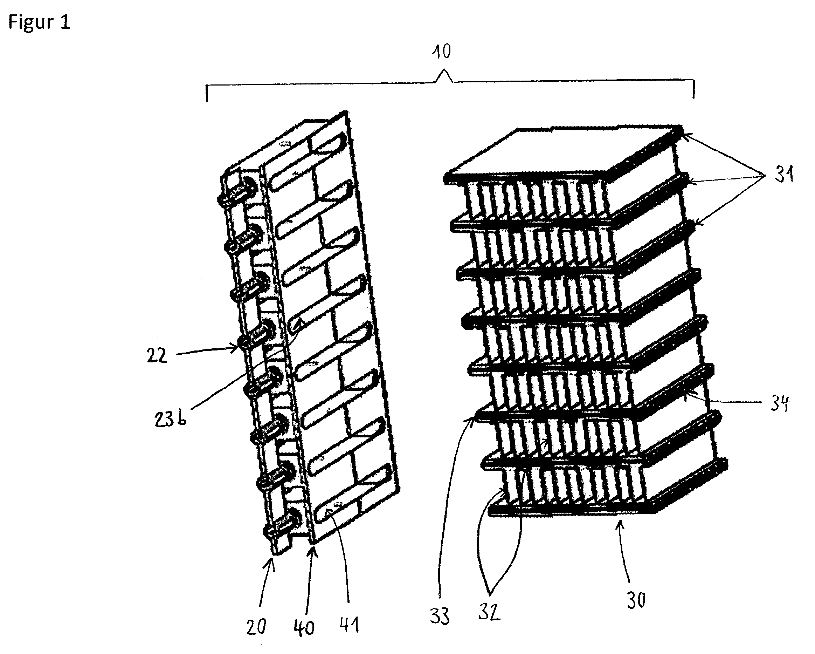

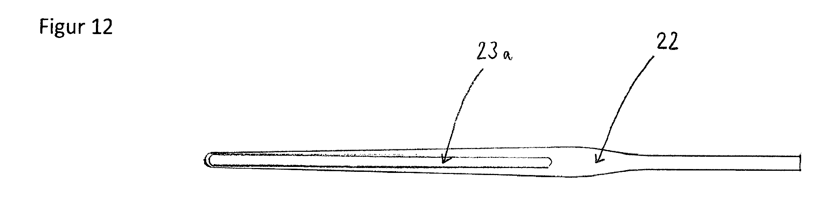

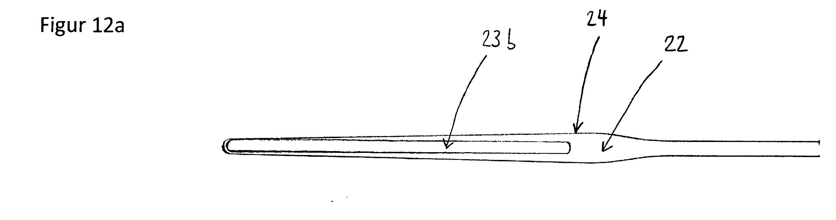

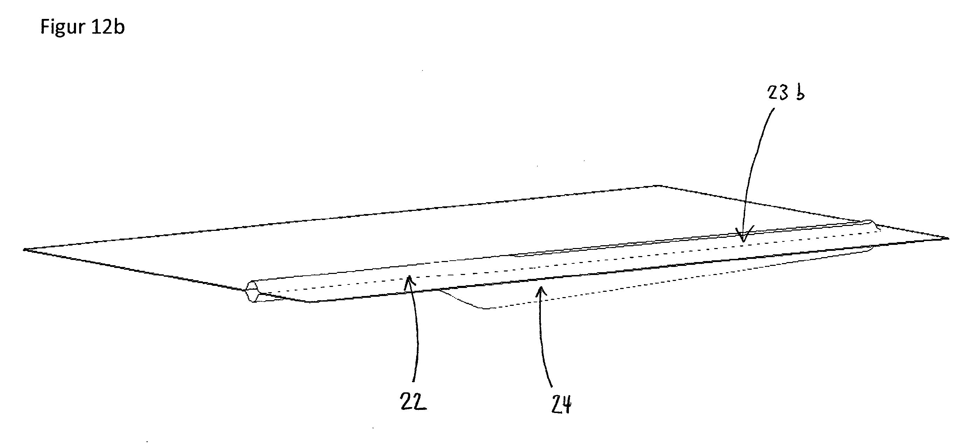

Figur 1 zeigt einen indirekten Verbund aus einem Fluidverteilungselement 20, einem 1-Pass-Wärmeübertrager 30 und ein Verbindungselement 40 zum gesamten 1-Pass-Wärmetauschersystem 10. Das Fluidverteilungselement 20 umfasst dabei eine Vielzahl von parallel geführten Fluidführungskanälen 22; der zentrale Einlass 21, die Verzweigungen zu den insgesamt 8 dargestellten Fluidführungskanälen 22 sowie das auf der Auslassseite angeordnete Fluidsammelsystem bzw. -element sind in Figur 1 nicht dargestellt. Das Verbindungselement besteht in dieser Ausführungsform aus einem Stück, enthält aber für jede Auslassöffnung des Fluidverteilungselements sowie jedes Rohr des 1-Pass-Wärmeübertrages einen Anschluss. Wie Figur 12 ermöglicht diese Ausführungsform einen Anschluss des Wärmeübertragers an die Öffnungen in Form von Langlöchern oder Schlitzen.

Ein jeder der Fluidführungskanäle 22 des Fluidverteilungselements 20 weist dabei jeweils einen Fluidauslass 23b auf, der im Falle der Figur 1 in die Wandung eines jeden Fluidführungskanals 22 eingebracht ist. Der Umriss der Apertur der Öffnung dieser Fluidauslässe 23b entspricht denen der Flachrohre 33 des 1-Pass-Wärmeübertragers 30, sodass der 1-Pass-Wärmeübertrager 30 formschlüssig in das Fluidverteilungselement 20 eingesteckt werden kann. Der 1-Pass-Wärmeübertrager 30 ist dabei aus einer Mehrzahl parallel zueinander verlaufender Flachrohre 31 aufgebaut, die jeweils über Luftkühllamellen 32 miteinander verbunden sind. Die Rohre 31 können über eine Seite 33 (Rohreintritt) mit dem Fluid angeströmt werden, die Flachrohre 31 weisen auf der gegenüberliegenden Seite einen Fluidauslass 34 auf. Die Fluideinlässe 33 des 1-Pass-Wärmeübertragers 30 stehen etwas über die Rippen 32 hinaus ab, sodass der Überstand in die jeweiligen Fluidauslässe 23b des Fluidverteilungseiementes 20 eingeführt werden kann. Ein Verbund zwischen Fluidverteilungselementen 20 und 1-Pass-Wärme-übertrager 30 kann beispielsweise mittels eines Lötverfahrens hergestellt werden.

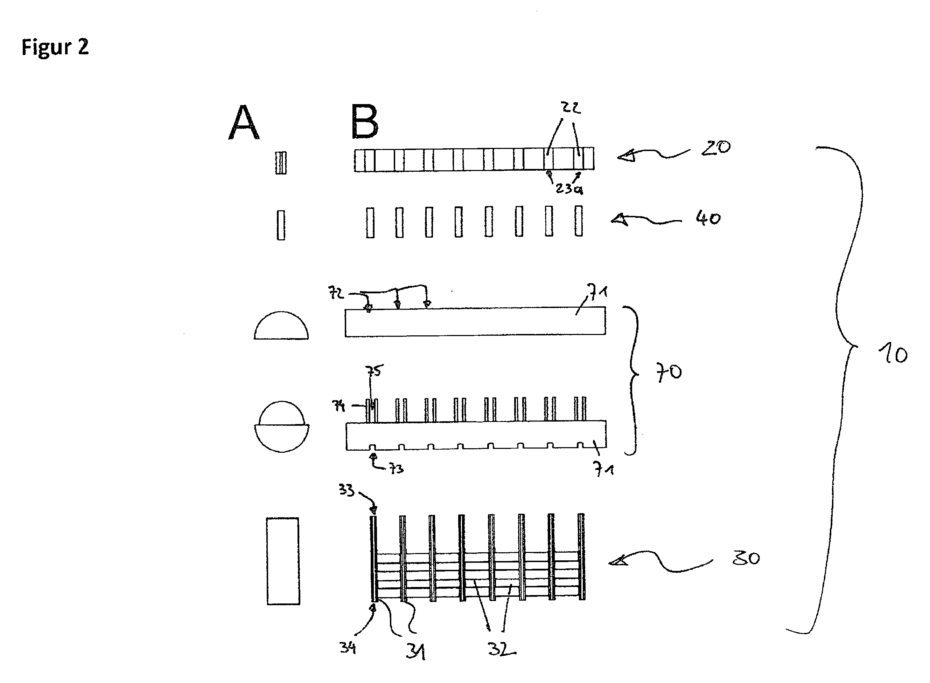

Figur 2 zeigt eine schematische Darstellung einer weiteren bevorzugten Ausführungsform eines erfindungsgemäßen 1-Pass-Wärmetauschersystems 10. In Figur 2 sind zwei perspektivische Darstellungen angegeben, wobei die Perspektive A eine Ansicht der Darstellung B in der Zeichenebene von links darstellt.

Das 1-Pass-Wärmetauschersystem 10, wie in Figur 2 dargestellt, ist aus einem Fluidverteilungselement 20, einem 1-Pass-Wärmeübertrager 30 sowie zwischen Fluidverteilungselement 20 und 1-Pass-Wärmeübertrager 30 angeordneten Verbindungselementen 40 und einem Sammelkasten 70 gebildet.

Das Fluidverteilungselement 20 weist dabei erneut eine Vielzahl von parallel geführten Fluidverteilungskanälen 22 mit jeweils am Ende des Fluidverteilungskanals angebrachten Fluidaustrittsöffnungen 23a auf. In diese Austrittsöffnungen 23a können die Verbindungselemente 40 eingeführt und mit den Kanälen 22 verbunden werden, beispielsweise durch Lötverfahren.

Der 1-Pass-Wärmeübertrager 30 ist in analoger Weise wie in Figur 1 dargestellt ausgeführt. Als Übergang zwischen Fluidverteilungselement 20 und Wärmeübertrager 30 ist ein Sammelkasten angebracht, der aus einem Gehäuse 71 sowie im Gehäuse angebrachten Trennungsblechen 74 besteht. Durch die paarweise angebrachten Trennungsbleche 74 entsteht ein abgeschlossener Kanal 75 innerhalb des Sammelkastens 70. Das Gehäuse 71 des Sammelkastens 70 weist eine Mehrzahl von Eintrittsöffnungen 72 auf, die an den Stellen vorgesehen sind, in die die Verbindungselemente 40 mit dem Sammelkasten 70 verbunden bzw. in diesen eingeführt werden sollen. Die Trennbleche 74 sind dabei innerhalb des Sammelkastens 70 bevorzugt derart angeordnet, dass die Fluidströmung, die aus den Verbindungselementen 40 in den Sammelkasten 70 eintritt, direkt in die abgeschlossenen Kanäle 75 eingeleitet wird. Der auf der anderen Seite des Sammelkastens 70 angeordnete Gehäuseteil 71 weist dabei eine Mehrzahl von Austrittsöffnungen 73 auf, über die das von den Strömungskanälen 75 geleitete Fluid aus dem Sammelkasten 70 austreten kann. In diese Öffnungen 73 können auch die Fluideintrittsöffnungen 33 des 1-Pass-Wärmeübertragers 30 eingeführt bzw. eingesteckt werden. Der gesamte Verbund aus den einzelnen Bauteilen kann ebenso beispielsweise durch ein Lötverfahren miteinander verbunden sein. Genauso ist eine Verbindung von Teilverbünden möglich. Vorzugsweise werden das Fluidverteilungselement 20, die Verbindungselemente 40 sowie die Hälfte des Sammelkastens 71 mit den Anschlüssen für die Verbindungselemente 72 als Teilverbund prozessiert sowie der Wärmeübertrager 30 mit der anderen Hälfte des Sammelkastens 71 mit den Anschlüssen 73 für die Rohre und optional den paarweisen Trennblechen 74.

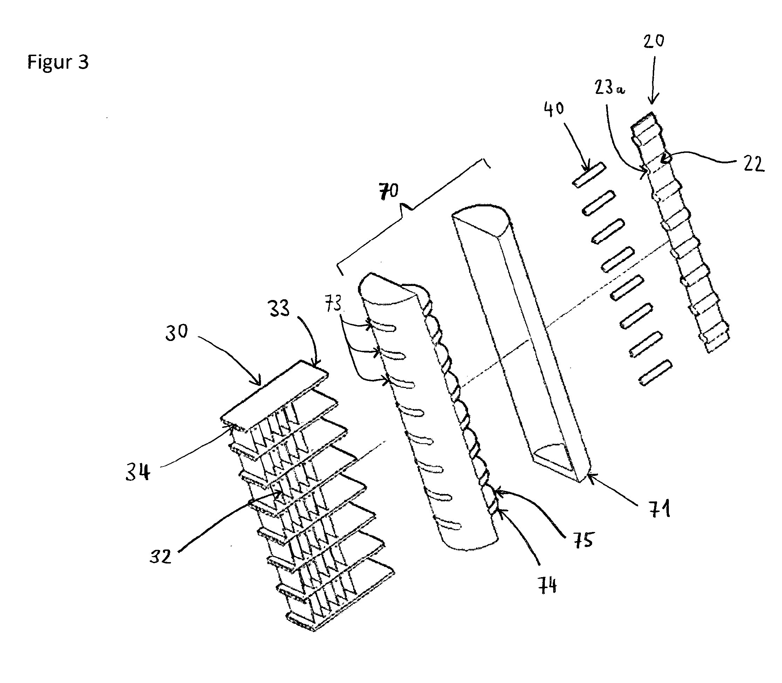

Figur 3 zeigt die Explosionszeichnung aus Figur 2 in perspektivischer Darstellung, wobei die gleichen Bezugszeichen die gleichen Elemente darstellen.

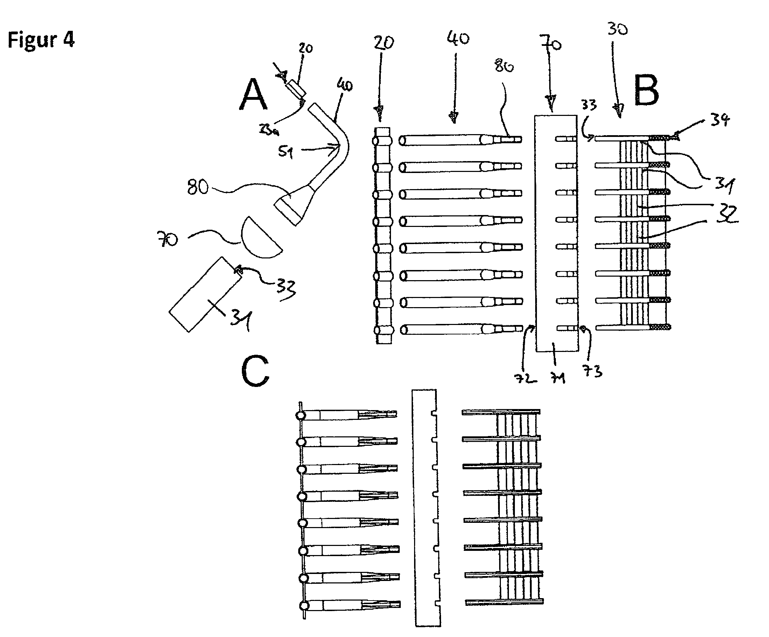

Eine weitere Ausführungsform des erfindungsgemäßen 1-Pass-Wärmetauschersystems ist in Figur 4 dargestellt. Diese Ausführungsform ist im Wesentlichen der in Figur 3 dargestellten Ausführungsform ähnlich; auch hier sind Verbindungselemente 40 zwischen dem Fluidverteilungselement 20 und dem Wärmeübertrager 30 angeordnet. Figur 4A zeigt eine Aufsicht auf das erfindungsgemäße 1-Pass-Wärmetauschersystem, während Figur 4B eine schematische Explosionszeichnung dieses Systems darstellt. Figur 4C zeigt weiter den teilweisen Zusammenbau des Fluidverteilungselements 20 und der Verbindungselemente 40. Maßgeblich bei Figur 4 ist, dass die Verteilungselemente 40 eine Krümmung 51 aufweisen und mit einem Übergangsbereich 80 ausgestattet sind, in dem der ursprünglich runde Querschnitt des Verbindungselementes in einen abgeflachten Rohrquerschnitt übergeht. Insofern ist eine direkte Verbindung dieses Endabschnittes 80 mit den Flachrohren 31 des Wärmeübertragers möglich. Das in den Figuren dargestellte Trennblech 70 dient dabei der Stabilisierung der Zusammenführung zwischen den Austrittsöffnungen 80 der Verbindungselemente und den Eintrittsöffnungen 33 des Wärmeübertragers. Hier ist es denkbar, dass für die Fertigung des Verbunds aus Wärmeübertrager 30 und Sammelkasten 70 auch die Verbindungselemente in einem Verfahrensschritt gelötet werden, und nur der Anschluss an das Fluidverteilungselement 20 in einem nachfolgendem Verfahrensschritt erfolgt, um die Abmessungen für die Prozessierung in der Lötstraße kompakt zu belassen.

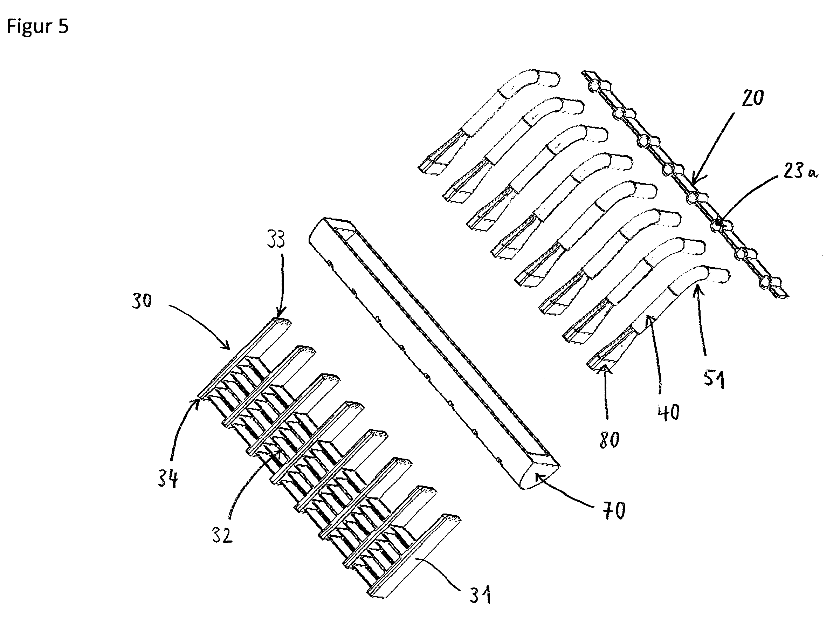

Figur 5 zeigt die in Figur 4 schematisch dargestellte Ausführungsform in perspektivischer Darstellung, wobei die gleichen Bezugszeichen die gleichen Elemente bezeichnen.

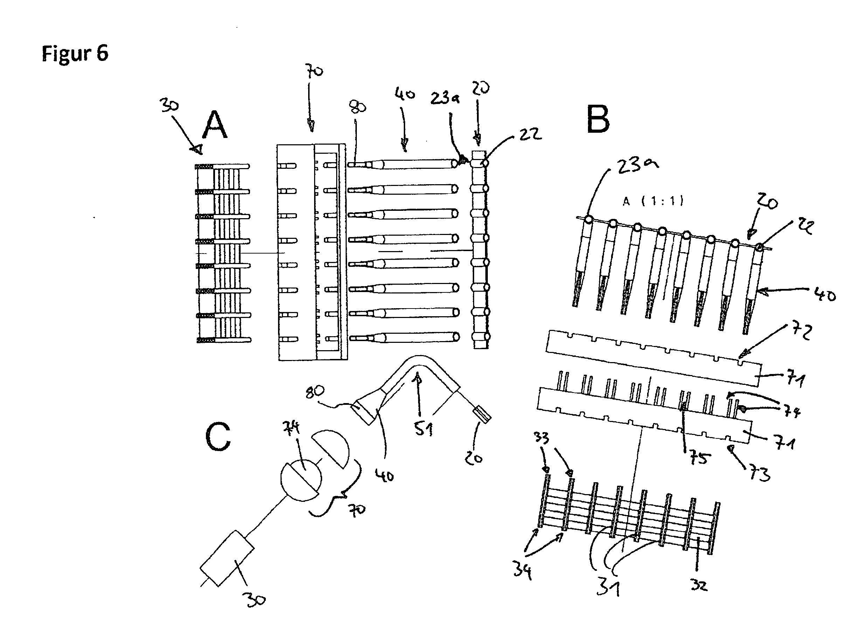

Eine weitere bevorzugte Ausführungsform ist in Figur 6 dargestellt. Diese Ausführungsform entspricht im Wesentlichen einer Kombination der Ausführungsformen, wie in Figur 2 und Figur 4 dargestellt. Auch hier zeigen Figur 6A und 6B Explosionszeichnungen sowie Figur 6C eine Aufsicht auf ein erfindungsgemäßes 1-Pass-Wärmetauschersystem. Dargestellt sind erneut ein Fluidverteilungselement 20, Verbindungselemente 40, ein Sammelkasten 70 sowie ein 1-Pass-Wärmeübertrager, die zum gesamten 1-Pass-Wärmetauschersystem kombiniert werden können. Der Sammelkasten 70 ist wie in Figur 2 dargestellt ausgeführt, zudem sind die Verbindungselemente 40 gewinkelt 51 ausgeführt und weisen wie beispielsweise in Figur 6c dargestellt eine Krümmung um einen rechten Winkel auf.

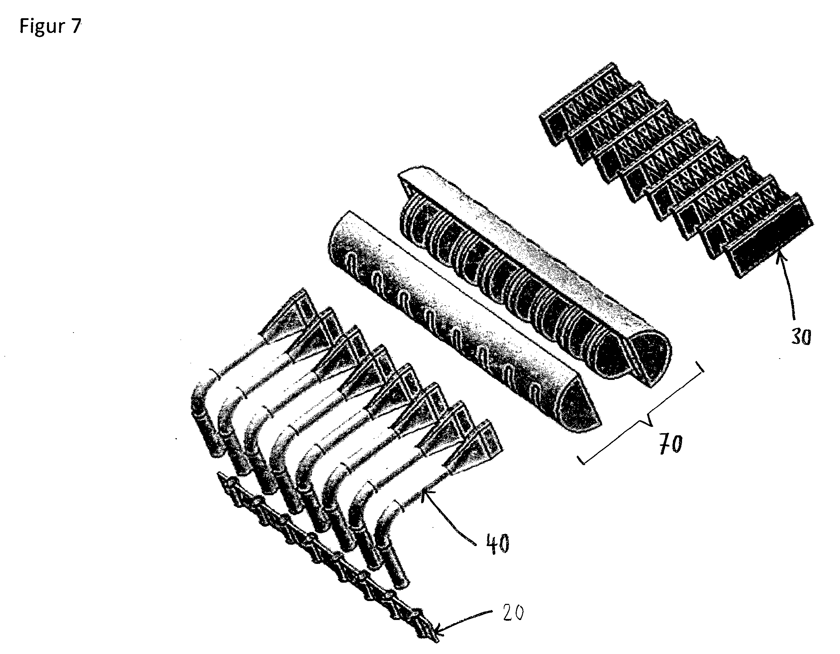

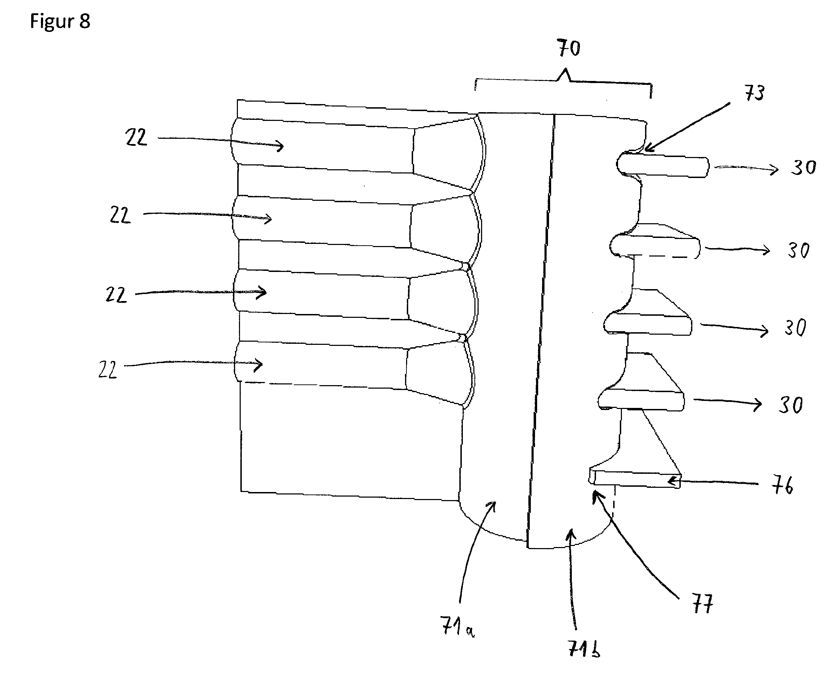

Figur 7 zeigt die perspektivische Darstellung eines entsprechenden in Figur 6 beschriebenen 1-Pass-Wärmetauschersystems, wobei die gleichen Bezugszeichen die gleichen Elemente bezeichnen. Figur 8 zeigt einen Ausschnitt eines Anschlusses Fluidauslässen 23 eines Fluidverteilungselements 20 an einem Sammelkasten 70 über einen Sammelkasten 70 an einem 1-Pass-Wärmeübertrager. Gut erkennbar sind die beiden das Gehäuse 71 bildenden Halbschalen des Sammelkastens 70. Die Fluidführungskanäle 22 sind dabei einstückig mit dem Sammelkasten 70 ausgebildet, in die Austrittsöffnungen 73 auf der gegenüberliegenden Seite des Sammelkastens 70 sind die Eintrittsöffnungen des Wärmeübertragers 30 eingefügt.

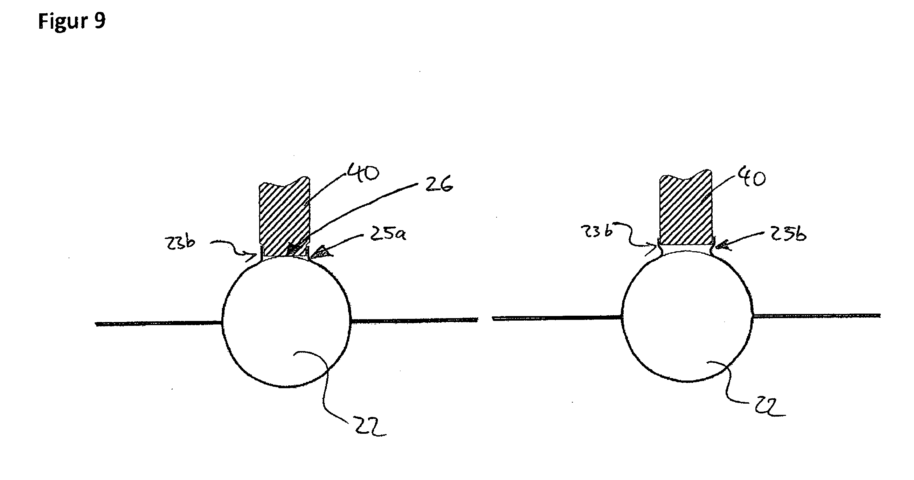

Der Sammelkasten 70 gemäß Figur 8 weist zudem eine Öffnung auf, in die ein Fixierelement 76, beispielsweise ein massives Metallstück oder ein entsprechend ausgeformtes Blech, eingefügt werden kann, über das der Sammelkasten 70 zusammen mit den angefügten weiteren Elementen beim Herstellungsprozess, d.h. beim Verbinden aller Elemente beispielsweise über einen Lötprozess, fixiert werden kann. Diese Ausführungsform ist zur Fixierung im losten Zustand von Rohren und Rippen und zur Prozessierung in der Lötstraße generell für jede Ausführungsform des 1-Pass-Wärmeübertragers denkbar. Figur 9 zeigt besondere Ausführungsformen von Fluidführungskanälen 22 eines Fluidverteilungselementes 20, bei denen die Fluidauslässe 23b in die Wandung des Fluidführungskanals 22 eingefügt sind. Diese Fluidaustrittskanäle können beispielsweise als Langlöcher oder als entsprechende Schlitze ausgebildet sein. In diese Austrittsöffnungen 23b kann beispielsweise ein Verbindungselement 40 formschlüssig eingefügt werden. Das Verbindungselement 40 weist im Bereich, in dem es mit dem Fluidführungskanal 22 verbunden wird eine Verjüngung 26 des Querschnitts auf. In Figur 9 links dargestellt ist eine Ausführungsform, die einen einfachen Kragen 25a darstellt; hierbei ist die Wandung des Fluidführungskanals entsprechend dem Durchmesser des Verbindungselementes angepasst. In der Figur 9 rechts dargestellt ist eine Ausführungsform, die einen geschulterten Kragen 25b aufweist, hierbei ist die Auskragung leicht eingekerbt, sodass ein gewisser Abstand zwischen dem Verbindungselement 40 und dem Fluidführungskanal 22 hergestellt werden kann. Anstelle des Verbindungselementes 40 kann ebenso jedoch auch direkt ein 1-Pass-Wärmeübertrager 30 (nicht dargestellt) in die Auskragung eingefügt werden. Eine derartige Ausführungsform ist beispielsweise in Figur 12 dargestellt.

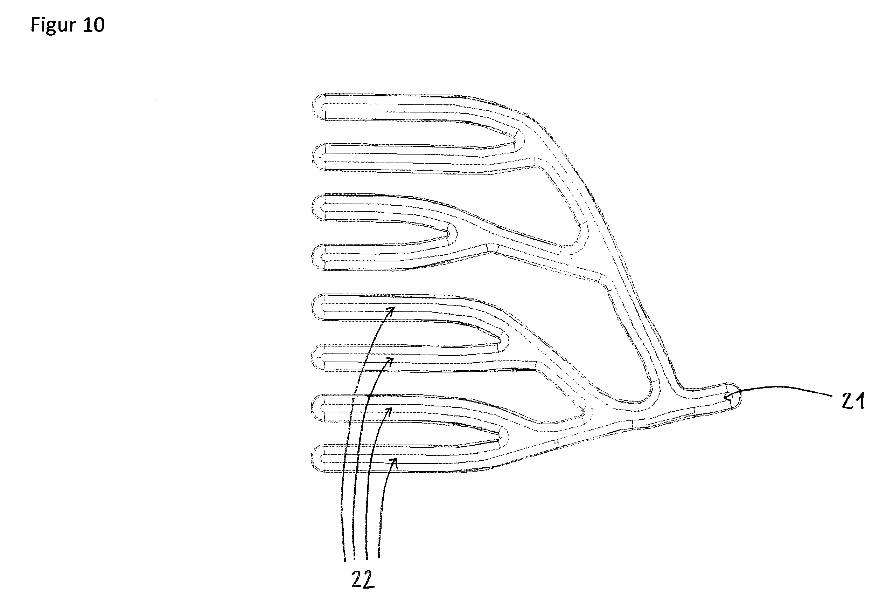

Figur 10 zeigt ein beispielhaftes Unterblech einer Fluidverteilungsstruktur 20 in IHB-Fertigungsweise. Das Fluidverteilungselement weist einen gemeinsamen Fluideinlass 21 auf; es erfolgt eine asymmetrische Verteilung der einzelnen Kanäle zu verschiedenen Fluidverteilungskanälen 22, die vorzugsweise spiegelsymmetrisch auszuführen ist, um den Verteilungsprozess zu vereinfachen. Das Fluidverteilungselement wird durch ein entsprechendes Oberblech fertig gestellt.

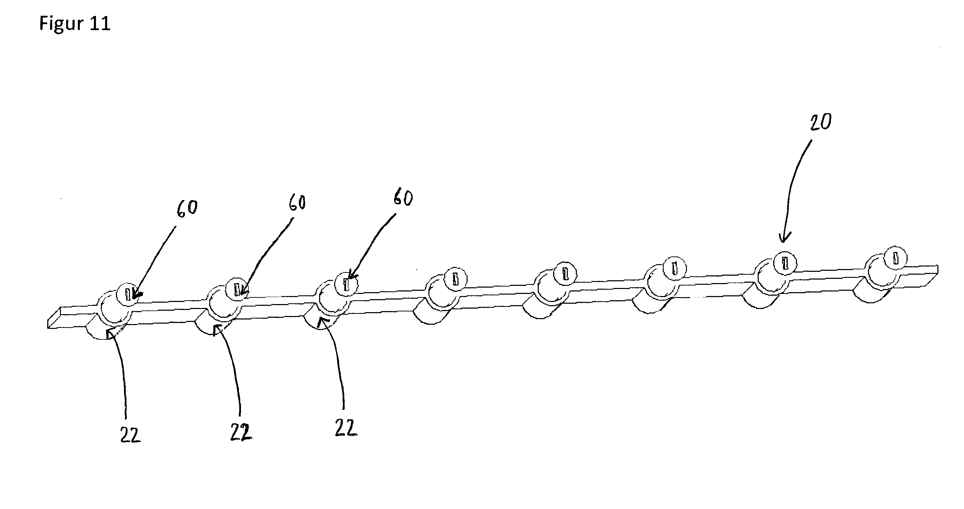

Figur 11 zeigt eine besondere Ausführungsform eines Fluidverteilungselementes, bei dem direkt an die Austrittsöffnung der Fluidverteilungskanäle 22 Düsen 60 angefügt sind, um die Fluidströmung und/oder das Kondensations- bzw. Verdampfungsverhalten des durchströmenden Fluids zu beeinflussen. Figur 12a zeigt einen einzelnen Fluidführungskanal 22, in den ein Langloch 23b in die Wandung dieses Kanals eingefügt ist. Der Fluidführungskanal 22 wird dabei in Figur 12 von rechts nach links vom Fluid durchströmt, wobei das Fluid den Fluidführungskanal 22 senkrecht zur Bildebene nach oben durch das Langloch 23b verlässt.

Gut erkennbar ist die im Bereich des Langlochs 23b ausgebildete Aufweitung des Fluidführungskanals 22 in der Aufsicht von oben. In diesem Bereich weist der Fluidführungskanal 22 einen erweiterten oder vergrößerten Rohrquerschnitt auf. Die Ausweitung 24 des Durchschnitts des Fluidführungskanals 22 ist dabei zusätzlich unmittelbar vor dem Bereich des Langlochs ausgebildet.

Figur 12b zeigt eine andere perspektivische Darstellung des in Figur 12a abgebildeten Fluidführungskanals 22, die in Figur 12b dargestellte perspektivische Darstellung entspricht eine Ansicht der in Figur 12a dargestellten Abbildung von in Bildebene von oben auf den Fluidführungskanal 22 schauend. In der in Figur 12b dargestellten Perspektive ist das Langloch 23b oben auf dem Fluidführungskanal ausgebildet. Erkennbar ist ebenso, dass der Fluidführungskanal bzw. die gesamte Struktur durch Verbinden zweier Bleche durch ein Fügeverfahren herstellt ist. Zusätzlich ist erkennbar, dass die Ausweitung 24 des Fluidführungskanals insbesondere auch im untenliegenden Blech des Fluidführungskanals 22 ausgebildet ist, sodass der Fluidführungskanal 22 in dem Langloch 23b gegenüberliegenden Bereich eine Art Vertiefung aufweist. Durch diese Vertiefung ist zum einen gewährleistet, dass die Einstecktiefe von in das Langloch 23b eingesteckten Flachrohren variiert werden kann. Zum anderen kann auch die Strömung des Fluids durch eine derartige Vertiefung 24 verbessert werden.

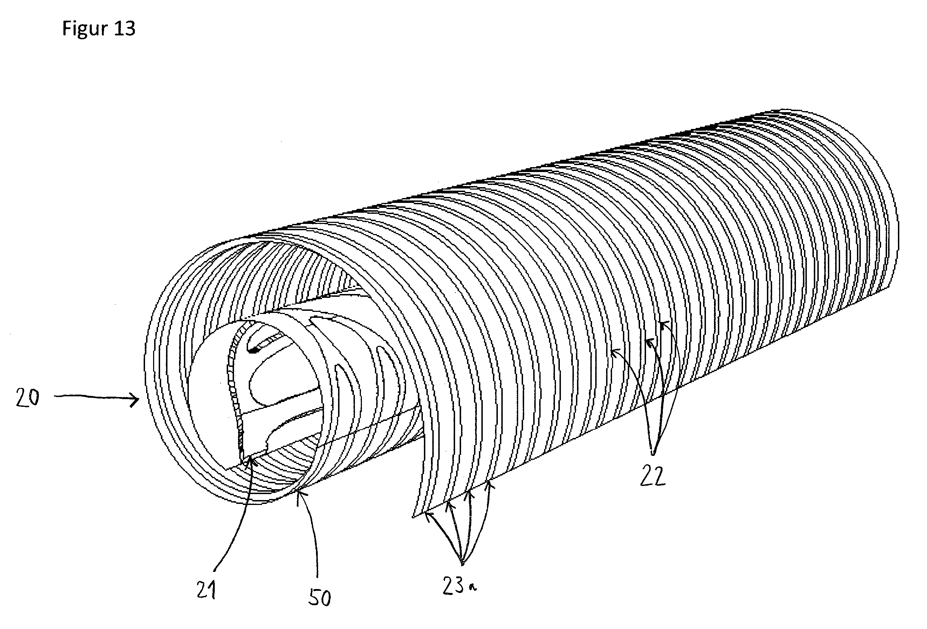

Figur 13 zeigt eine weitere mögliche Ausführungsform einer Fluidverteilungsstruktur 20, die um eine weitere Dimension 50 gekrümmt ist. Auch eine derartige Verteilungsstruktur eignet sich zur Herstellung eines 1-Pass-Wärmetauschersystems gemäß der vorliegenden Erfindung.

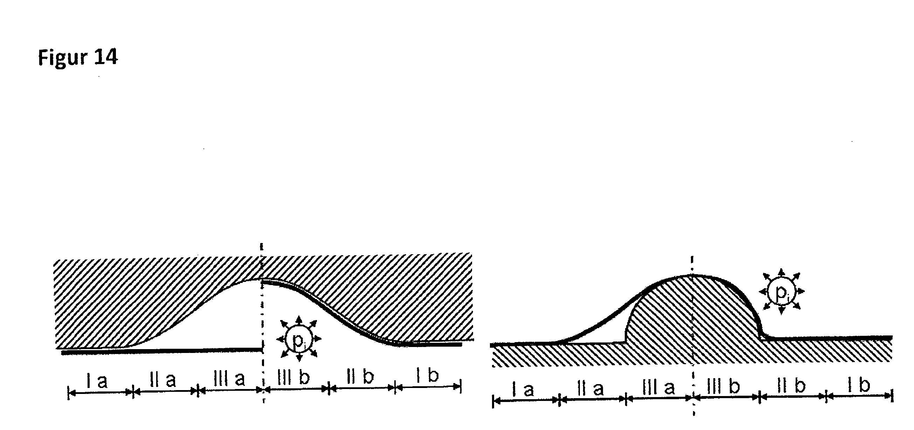

Figur 14 zeigt beispielsweise Herstellungsverfahren zur Einbringung einer Kanalstruktur in ein Fluidverteilungselement. Die Kanalstruktur wird in zwei Stufen mithilfe von Wirkmedien und/oder Wirkenergie in Kombination mit einem formspeichernden Werkzeug ausgeformt, wobei die Ausformungsrichtung bzw. die Lage von formlosen Medien und formspeichernden Elementen im Bezug zum auszuformenden Bauteil wechselseitig ist. Durch die wechselseitige Verfahrensweise wird das Ausgangsmaterial in allen drei Zonen I, II und III ausgedünnt, was neben einer gleichmäßigen finalen wanddicken Verteilung eine reduzierte Ausgangswanddicke (Materialeffizienz, Leichtbau) erlaubt und zudem eine bessere geometrische Abformung eines halbkreisförmigen Fluidkanals ermöglicht. Figur 14 stellt zwei mögliche Ausführungen des zweistufigen Prozesses dar, wobei je Stufe in der linken Hälfte die Ausgangssituation und in der rechten Hälfte die Endsituation der Stufe dargestellt ist.

Die Umformungsverfahren derartiger Bleche können insbesondere durch Innenhochdruckverformungsverfahren bewerkstelligt werden, hierbei werden insbesondere Fluide eingesetzt. Die in Figur 14 dargestellten schraffierten Bereiche stellen eine Art Schablone dar, über die die Bleche (schwarze durchgehende Striche) in das Schablonenwerkzeugmittels über Druck eingefügt werden können. Es sind hierbei zwei Varianten denkbar, einerseits eine negativ ausgeformte Schablone (Figur 14, linker Teil), sowie eine positiv ausgeformte Schablone (Figur 14, rechter Teil).

## Patentansprüche

1. Wärmetauschersystem (10), umfassend
a) ein Fluidverteilungselement (20) mit einem zentralen Einlass (21) und einer Mehrzahl von Fluidführungskanälen (22) mit jeweils einem Fluidauslass (23),
b) mindestens einen 1-Pass-Wärmeübertrager (30), der aus einer Mehrzahl in einer Ebene angeordneten durchströmbaren Rohren (31) mit planen Teilflächen, vorzugsweise Flachrohren, sowie Rippen (32), die an diesen planen Teilflächen mit den Rohren (31) verbunden sind, besteht und die Rippen (32) zum Wärmeaustausch mit Luft umströmbar sind, wobei jedes der in einer Ebene angeordneten durchströmbaren Rohre (31) einen Rohreintritt (33) für ein Fluid und einen Rohraustritt (34) für ein Fluid aufweist, wobei die Rohraustritte (34) in ein Fluidsammelsystem münden.
wobei
das Fluidverteilungselement (20) die gleiche Anzahl an Fluidauslässen (23) aufweist, wie der 1-Pass-Wärmeübertrager (30) durchströmbare Rohre (31) aufweist, **dadurch gekennzeichnet, dass** das Fluidverteilungselement (20) eine fluiddichte, kanalartige Fluidführung umfasst, die sich kaskadiert und binär in die Mehrzahl von Fluidführungskanälen (22) verzweigt, wobei
c) eine direkte Verbindung des Fluidverteilungselementes (20) mit dem 1-Pass-Wärmeübertrager (30) realisiert ist, wobei jeder Fluidauslass (23) des Fluidverteilungselementes (20) stoffschlüssig und fluiddicht mit jeweils einem Rohreintritt (33) eines Rohres (31) des Wärmeübertragers (30) verbunden ist, oder
d) eine indirekte Verbindung des Fluidverteilungselementes (20) mit dem 1-Pass-Wärmeübertrager (30) realisiert ist, wobei jeder Fluidauslass (23) des Fluidverteilungselementes (20) stoffschlüssig und fluiddicht mit jeweils einem Rohreintritt (33) eines Rohres (31) des Wärmeübertragers (30) verbunden ist, wobei die Verbindung über jeweils ein fluiddicht durchströmbares Verbindungselement (40) oder über ein Verbindungselement (40) mit einer der Anzahl der zu verbindenden Fluidauslässe (23) und Rohreintritte (33) entsprechenden Anzahl an verbindenden Fluidführungen (41) realisiert ist.

2. Wärmetauschersystem (10) nach Anspruch 1, **dadurch gekennzeichnet, dass** die kaskadierte und binäre Verzweigung der Fluidführungskanäle des Fluidverteilungselementes (20) symmetrisch ausgeführt ist.

3. Wärmetauschersystem (10) nach einem der vorhergehenden Ansprüche, **dadurch gekennzeichnet, dass** die Fluidführungskanäle (22) des Fluidverteilungselements plan in einer Ebene liegend angeordnet sind oder eine Krümmung (50) und/oder einen Knick um eine weitere Dimension aufweisen.

4. Wärmetauschersystem (10) nach einem der vorhergehenden Ansprüche, **dadurch gekennzeichnet, dass** der Fluidauslass (23) jedes Fluidführungskanals (22)
a) am Ende des jeweiligen Fluidführungskanals (22) ausgebildet ist (23a), oder
b) in der Wandung des Fluidführungskanals (22) eingebracht ist, insbesondere als Schlitz oder Langloch (23b) ausgebildet ist.

5. Wärmetauschersystem (10) nach vorhergehendem Anspruch, **dadurch gekennzeichnet, dass** der in die Wandung des Fluidführungskanals (22) eingebrachte Fluidauslass (23b) eine einfache (25a) oder geschulterte Auskragung (25b) der Wandung des Fluidführungselementes aufweist und/oder der Rohreintritt (33) oder das Verbindungselement (40) einen verjüngten Querschnitt (26) aufweist, wobei der Rohreintritt (33) oder das Verbindungselement (40) stoffschlüssig mit der Auskragung (25a, 25b) verbunden ist.

6. Wärmetauschersystem (10) nach einem der vorhergehenden Ansprüche, **dadurch gekennzeichnet, dass** der Fluidauslass des Fluidverteilungselementes (20) und/oder das fluiddicht durchströmbare Verbindungselement (40) eine Düse (60) zur Beeinflussung des Strömungsprofils des Fluids aufweist.

7. Wärmetauschersystem (10) nach einem der vorhergehenden Ansprüche, **dadurch gekennzeichnet, dass**
a) im Falle einer direkten Verbindung des Fluidverteilungselementes (20) mit dem 1-Pass-Wärmeübertrager (30) zwischen einem Fluidauslass (23) des Fluidverteilungselementes (20) und dem Rohreintritt (33) eines korrespondierenden Rohres (31) des Wärmeübertragers, oder
b) im Falle einer indirekte Verbindung des Fluidverteilungselementes (20) mit dem 1-Pass-Wärmeübertrager (30) über ein Verbindungselement (40) zwischen dem Verbindungselement (40) und dem Rohreintritt (33) des korrespondierenden Rohres (31) des Wärmeübertragers (30) ein Rohrboden, Verteilerbehältnis, Verteiler-, Sammelkasten (70) oder ein Teil desselben angeordnet ist.

8. Wärmetauschersystem (10) nach vorhergehendem Anspruch, **dadurch gekennzeichnet, dass** der Sammelkasten (70) ein Gehäuse (71) mit einer der Anzahl der Fluidauslässe des Fluidverteilungselements entsprechenden Anzahl von Einlässen (72) und eine gleiche Zahl von Auslässen (73) aufweisen, wobei jeder Einlass (72) einem Auslass (73) zugeordnet ist und im Inneren des Gehäuses (71) über Trennbleche (74) ein abgeschlossener Kanal (75) für das Fluid definiert ist.

9. Wärmetauschersystem (10) nach vorhergehendem Anspruch, **dadurch gekennzeichnet, dass** die Geometrie der Einlässe (72) und/oder der Auslässe (73) des Sammelkastens (70) dem Querschnitt der Fluidauslässe (23) des Fluidverteilungselements (20) oder dem Querschnitt der Fluidauslässe des Verbindungselementes (40) bzw. dem Querschnitt der durchströmbaren Rohre (31) mit planen Teilflächen, vorzugsweise Flachrohre des 1-Pass-Wärmeübertragers (30) entspricht.

10. Wärmetauschersystem (10) nach einem der Ansprüche 8 oder 9, **dadurch gekennzeichnet, dass** das Gehäuse (71) oder ein Teil des Gehäuses (71a) des Sammelkastens (70) einstückig mit den Fluidauslässen (23) des Fluidverteilungselements (20) oder den Verbindungselementen (40) ausgebildet ist.

11. Wärmetauschersystem (10) nach einem der vorhergehenden Ansprüche, **dadurch gekennzeichnet, dass** die Verbindungselemente (40) gebogen oder gekrümmt (51) sind.

12. Verfahren zur Herstellung eines Wärmetauschersystems (10) nach einem der vorhergehenden Ansprüche, bei dem
a) das Fluidverteilungselement (20), der Wärmeübertrager (30) sowie ggf. der Rohrboden, das Verteilerbehältnis, der Verteiler-, der Sammelkasten (70) oder ein Teil desselben, oder
b) das Fluidverteilungselement (20), der Wärmeübertrager (30) und die Verbindungselemente (40) sowie ggf. der Rohrboden, das Verteilerbehältnis, der Verteiler-, der Sammelkasten (70) oder ein Teil desselben
formschlüssig gefügt sowie stoffschlüssig und fluiddicht miteinander verbunden werden.

13. Verfahren nach vorhergehendem Anspruch, **dadurch gekennzeichnet, dass** das stoffschlüssig und fluiddichte Verbinden mittels eines Lötprozesses erfolgt.

14. Fluidverteilungselement (20), umfassend einen zentralen Einlass (21) und fluiddichter, kanalartiger Fluidführung, die sich kaskadiert und binär in eine Mehrzahl von Fluidführungskanälen (22) mit jeweils einem Fluidauslass (23) verzweigt, wobei der Fluidauslass (23b) jedes Fluidführungskanals (22) in der Wandung des Fluidführungskanals (22) eingebracht ist, **dadurch gekennzeichnet, dass** der Querschnitt des Fluidführungskanals, im Bereich des Fluidauslasses (23b) im Vergleich zum Querschnitt des Fluidführungskanals (22) im Bereich der Kaskadierung vergrößert (24) ist.

## Claims

1. Heat exchanger system (10), comprising
a) a fluid distribution element (20) having a central inlet (21) and a plurality of fluid guidance channels (22) with respectively one fluid outlet (23),
b) at least one 1 pass heat exchanger (30) which consists of a plurality of through-flowable tubes (31) which are disposed in one plane and have planar partial faces, preferably flat tubes, and also fins (32) which are connected on these planar partial faces to the tubes (31), and the fins (32) can be flowed round for heat exchange with air, each of the through-flowable tubes (31) disposed in one plane having a tube inlet (33) for a fluid and a tube outlet (34) for a fluid, the tube outlets (34) opening into a fluid collection system,
the fluid distribution element (20) having the same number of fluid outlets (23) as the 1 pass heat exchanger (30) has through-flowable tubes (31), wherein the fluid distribution element (20) comprises a fluid-sealed, channel-like fluid guide which cascades and branches in a binary manner into the plurality of fluid guidance channels (22) and wherein
c) a direct connection of the fluid distribution element (20) to the 1 pass heat exchanger (30) being produced, each fluid outlet (23) of the fluid distribution element (20) being connected integrally and in a fluid-sealed manner to respectively one tube inlet (33) of a tube (31) of the heat exchanger (30), or
d) an indirect connection of the fluid distribution element (20) to the 1 pass heat exchanger (30) being produced, each fluid outlet (23) of the fluid distribution element (20) being connected integrally and in a fluid-sealed manner to respectively one tube inlet (33) of a tube (31) of the heat exchanger (30), the connection being produced via respectively a fluid-sealed, through-flowable connection element (40) or via a connection element (40) with a number of connecting fluid guides (41) which corresponds to the number of fluid outlets (23) and tube inlets (33) to be connected.

2. Heat exchanger system (10) according to claim 1, **characterised in that** the cascaded and binary branching of the fluid guidance channels of the fluid distribution element (20) has a symmetrical configuration.

3. Heat exchanger system (10) according to one of the preceding claims, **characterised in that** the fluid guidance channels (22) of the fluid distribution element are disposed situated flat in one plane or have a bend (50) and/or an elbow by a further dimension.

4. Heat exchanger system (10) according to one of the preceding claims, **characterised in that** the fluid outlet (23) of each fluid guidance channel (22) is configured
a) at the end of the respective fluid guidance channel (22), (23a), or
b) is introduced into the wall of the fluid guidance channel (22), in particular is configured as a slot or an oblong hole (23b).

5. Heat exchanger system (10) according to the preceding claim, **characterised in that** the fluid outlet (23b) introduced into the wall of the fluid guidance channel (22) has a simple (25a) or shouldered projection (25b) of the wall of the fluid guidance element and/or the tube inlet (33) or the connection element (40) has a tapering cross-section (26), the tube inlet (33) or the connection element (40) being connected integrally to the projection (25a, 25b).

6. Heat exchanger system (10) according to one of the preceding claims, **characterised in that** the fluid outlet of the fluid distribution element (20) and/or the fluid-sealed, through-flowable connection element (40) has a nozzle (60) for influencing the flow profile of the fluid.

7. Heat exchanger system (10) according to one of the preceding claims, **characterised in that**
a) in the case of a direct connection of the fluid distribution element (20) to the 1 pass heat exchanger (30) between a fluid outlet (23) of the fluid distribution element (20) and the tube inlet (33) of a corresponding tube (31) of the heat exchanger, or
b) in the case of an indirect connection of the fluid distribution element (20) to the 1 pass heat exchanger (30) via a connection element (40) between the connection element (40) and the tube inlet (33) of the corresponding tube (31) of the heat exchanger (30),
a tube base, distributor container, distributor-, collection box (70) or a part of the same is disposed.

8. Heat exchanger system (10) according to the preceding claim, **characterised in that** the collection box (70) has a housing (71) with a number of inlets (72) which corresponds to the number of fluid outlets of the fluid distribution element and an equal number of outlets (73), each inlet (72) being assigned to one outlet (73) and, in the interior of the housing (71), a sealed channel (75) for the fluid being defined via baffle plates (74).

9. Heat exchanger system (10) according to the preceding claim, **characterised in that** the geometry of the inlets (72) and/or of the outlets (73) of the collection box (70) corresponds to the cross-section of the fluid outlets (23) of the fluid distribution element (20) or to the cross-section of the fluid outlets of the connection element (40) or to the cross-section of the through-flowable tubes (31) with planar partial faces, preferably flat tubes of the 1 pass heat exchanger (30).

10. Heat exchanger system (10) according to one of the claims 8 or 9, **characterised in that** the housing (71) or a part of the housing (71a) of the collection box (70) is configured in one piece with the fluid outlets (23) of the fluid distribution element (20) or with the connection elements (40).

11. Heat exchanger system (10) according to one of the preceding claims, **characterised in that** the connection elements (40) are bent or curved (51).

12. Method for the production of a heat exchanger system (10) according to one of the preceding claims, in which
a) the fluid distribution element (20), the heat exchanger (30) and also possibly the tube base, the distributor container, the distributor-, the collection box (70) or a part of the same or
b) the fluid distribution element (20), the heat exchanger (30) and the connection elements (40) and also possibly the tube base, the distributor container, the distributor-, the collection box (70) or a part of the same
are joined in a form fit and also connected to each other integrally and in a fluid-sealed manner.

13. Method according to the preceding claim, **characterised in that** the integral and fluid-sealed connection is effected by means of a soldering process.

14. Fluid distribution element (20) comprising a central inlet (21), and a fluid-sealed, channel-like fluid guide which cascades and branches in a binary manner into a plurality of fluid guidance channels (22) with respectively one fluid outlet (23), the fluid outlet (23b) of each fluid guidance channel (22) being introduced into the wall of the fluid guidance channel (22) wherein the cross-section of the fluid guidance channel is enlarged (24) in the region of the fluid outlet (23b), in comparison with the cross-section of the fluid guidance channel (22) in the region of the cascading.

## Revendications

1. Système d'échangeur de chaleur (10) comprenant :
a) un élément répartiteur de fluide (20) avec une entrée centrale (21) et une pluralité de canaux de guidage de fluide (22) avec chacun une sortie de fluide (23),
b) au moins un échangeur de chaleur en une passe (30), constitué d'une pluralité de tubes traversables (31), pouvant être traversés, disposés dans un plan, avec des surfaces partielles planes, de préférence des tubes plats, ainsi que des nervures (32), qui sont reliées à ces surfaces partielles avec les tubes (31), et les nervures (32) pouvant être contournées pour un échange de chaleur avec l'air, chacun des tubes traversables (31) comprenant une entrée de tube (33) pour un fluide et une sortie de tube (34) pour un fluide, les sorties de tubes (34) débouchant dans un système collecteur de fluide,
l'élément répartiteur de fluides (20) comprenant le même nombre de sorties de fluide (23) que l'échangeur de chaleur en une passe (30) comprend de tubes traversables (31),
**caractérisé en ce que** l'élément répartiteur de fluide (20) comprend un guidage de fluide étanche aux fluides et en forme de canaux, qui bifurque en cascade et de manière binaire en une pluralité de canaux de guidage de fluide (22),
c) une liaison directe de l'élément répartiteur de fluide (20) étant réalisée avec l'échangeur de chaleur en une passe (30), chaque sortie de fluide (23) de l'élément répartiteur de fluide (20) étant relié par liaison de matière et de manière étanche aux fluides avec une entrée de tube (33) d'un tube (31) de l'échangeur de chaleur (30), ou
d) une liaison indirecte de l'élément répartiteur de fluide (20) avec l'échangeur de chaleur en une passe (30) étant réalisée, chaque sortie de fluide (23) de l'élément répartiteur de fluide (20) étant relié par liaison de matière et de manière étanche aux fluides avec une entrée de tube (33) d'un tube (31) de l'échangeur de chaleur (30), la liaison étant réalisée par l'intermédiaire d'un élément de liaison traversable étanche aux fluides (40) ou par l'intermédiaire d'un élément de liaison (40) avec un nombre de guidages de fluide (41) de liaison correspondant au nombre de sorties de fluide (23) et d'entrées de tubes (33) à relier.

2. Système d'échangeur de chaleur (10) selon la revendication 1, **caractérisé en ce que** la bifurcation en cascade et binaire des canaux de guidage de fluide de l'élément répartiteur de fluide (20) est réalisée de manière symétrique.

3. Système d'échangeur de chaleur (10) selon l'une des revendications précédentes, **caractérisé en ce que** les canaux de guidage de fluide (22) de l'élément répartiteur de fluide sont disposés couchés de manière plane dans un plan ou présentent une courbure (50) et/ou un pli d'une dimension supplémentaire.

4. Système d'échangeur de chaleur (10) selon l'une des revendications précédentes, **caractérisé en ce que** la sortie de fluide (23) de chaque canal de guidage de fluide (22) :
a) est réalisée (23a) à l'extrémité du canal de guidage de fluide (22) correspondant, ou
b) est réalisée dans la paroi du canal de guidage de fluide (22), plus particulièrement sous la forme d'une fente ou d'un trou oblong (23b).

5. Système d'échangeur de chaleur (10) selon la revendication précédente, **caractérisé en ce que** la sortie de fluide (23b), réalisée dans la paroi du canal de guidage de fluide (22), présente une saillie simple (25a) ou à épaulement (25b) de la paroi de l'élément de guidage de fluide et/ou l'entrée de tube (33) ou l'élément de liaison (40) présente une section réduite (26), l'entrée de tube (33) ou l'élément de liaison (40) étant reliés entre eux par liaison de matière avec la saillie (25a, 25b).

6. Système d'échangeur de chaleur (10) selon l'une des revendications précédentes, **caractérisé en ce que** la sortie de fluide de l'élément répartiteur de fluide (20) et/ou l'élément de liaison traversable étanche aux fluides (40) comprend une buse (60) permettant d'influencer le profil d'écoulement du fluide.

7. Système d'échangeur de chaleur (10) selon l'une des revendications précédentes, **caractérisé en ce que**
a) dans le cas d'une liaison directe de l'élément répartiteur de fluide (20) avec l'échangeur de chaleur en une passe (30) entre une sortie de fluide (23) de l'élément répartiteur de fluide (20) et l'entrée de tube (33) d'un tube (31) correspondant de l'échangeur de chaleur, ou
b) dans le cas d'une liaison indirecte de l'élément répartiteur de fluide (20) avec l'échangeur de chaleur en une passe (30) par l'intermédiaire d'un élément de liaison (40) entre l'élément de liaison (40) et l'entrée d tube (33) du tube (31) correspondant de l'échangeur de chaleur (30),
se trouve un fond de tube, un récipient répartiteur, un caisson répartiteur, un caisson collecteur (70) ou une partie de celui-ci.

8. Système d'échangeur de chaleur (10) selon la revendication précédente, **caractérisé en ce que** le caisson collecteur (70) comprend un boîtier (71) avec un nombre d'entrées (72) correspondant au nombre de sorties de fluide de l'élément répartiteur de fluide et le même nombre de sorties (73), chaque entrée (72) correspondant à une sortie (73) et, à l'intérieur du boîtier (71), un canal fermé (75) pour le fluide est défini par des tôles de séparation (74).

9. Système d'échangeur de chaleur (10) selon la revendication précédente, **caractérisé en ce que** la géométrie des entrées (72) et/ou des sorties (73) du caisson collecteur (70) correspond à la section des sorties de fluide (23) de l'élément répartiteur de fluide (20) ou à la section des sorties de fluide de l'élément de liaison (40) ou à la section des tubes traversables (31) avec des surfaces partielles planes, de préférence des tubes plats de l'échangeur de chaleur en une passe (30).

10. Système d'échangeur de chaleur (10) selon l'une des revendications 8 ou 9, **caractérisé en ce que** le boîtier (71) ou une partie du boîtier (71 a) du caisson collecteur (70) est réalisé d'une seule pièce avec les sorties de fluide (23) de l'élément répartiteur de fluide (20) ou avec les éléments de liaison (40).

11. Système d'échangeur de chaleur (10) selon l'une des revendications précédentes, **caractérisé en ce que** les éléments de liaison (40) sont pliés ou incurvés (51).

12. Procédé de fabrication d'un système d'échangeur de chaleur (10) selon l'une des revendications précédentes, dans lequel :
a) l'élément répartiteur de fluide (20), l'échangeur de chaleur (30) ainsi que, le cas échéant, le fond de tube, le récipient répartiteur, le caisson répartiteur, le caisson collecteur (70) ou une partie de celui-ci, ou
b) l'élément répartiteur de fluide (20), l'échangeur de chaleur (30) et les éléments de liaison (40) ainsi que, le cas échéant, le fond de tube, le récipient répartiteur, le caisson répartiteur, le caisson collecteur (70) ou une partie de celui-ci
sont assemblés par complémentarité de forme ainsi que par liaison de matière et de manière étanche entre eux.

13. Procédé selon la revendication précédente, **caractérisé en ce que** la liaison par liaison de matière et étanche aux fluides a lieu au moyen d'un processus de brasage.

14. Élément répartiteur de fluide (20), comprenant une entrée centrale (21) et un guidage de fluide étanche aux fluides et présentant la forme d'un canal, qui bifurque en cascade et de manière binaire en une pluralité de canaux de guidage de fluide (22) avec chacun une sortie de fluide (23),
la sortie de fluide (23b) de chaque canal de guidage de fluide (22) est réalisée dans la paroi du canal de guidage de fluide (22),
**caractérisé en ce que**
la section du canal de guidage de fluide est agrandie (24), au niveau de la sortie de fluide (23b) par rapport à la section du canal de guidage de fluide (22) au niveau du montage en cascade.
